# EUROPEAN PATENT SPECIFICATION

(11) **EP 2 902 185 B1**
(45) Date of publication and mention of the grant of the patent: **02.08.2017**
(21) Application number: 12885781.0
(22) Date of filing: 27.09.2012
(51) Int. Cl.: B32B 5/24, E04F 13/07, B32B 5/18, B32B 38/00

(54) **METHOD FOR PRODUCING MULTILAYER FOAM SHEET**
VERFAHREN ZUR HERSTELLUNG EINER MEHRLAGIGEN SCHAUMFOLIE
PROCÉDÉ DE FABRICATION D'UNE FEUILLE DE MOUSSE MULTICOUCHES

(43) Date of publication of application: 05.08.2015
(73) Proprietor: Dai Nippon Printing Co., Ltd., Tokyo 162-8001 (JP)
(72) Inventor: Motono, Hiroyuki, Tokyo 162-8001 (JP); Kobayashi, Toshitake, Tokyo 162-8001 (JP); Koike, Hideaki, Tokyo 162-8001 (JP)
(74) Representative: Müller-Boré & Partner Patentanwälte PartG mbB
(86) International application number: PCT/JP2012/074974
(87) International publication number: WO 2014/049792

(56) References cited:
- JP-A- 2002 326 327
- JP-A- 2004 358 717
- JP-A- 2007 268 998
- JP-A- 2007 291 599
- JP-A- 2007 308 869
- JP-A- 2010 229 585
- DATABASE WPI Week 200416 Thomson Scientific, London, GB; AN 2004-169345 XP002756621, & WO 2004/013404 A1 (MITSUI CHEM INC) 12 February 2004 (2004-02-12)

## Description

### TECHNICAL FIELD

The invention relates to methods for manufacturing a layered sheet and a foamed layered sheet.

### BACKGROUND ART

Conventional methods disclosed for improving the stain resistance and scratch resistance of a foamed wallpaper sheet include providing in advance an ethylene-vinyl alcohol copolymer resin film (EVAL (trade name) Film) or a polypropylene film and laminating the film onto the surface of the foamed wallpaper sheet while embossing the film (Patent Documents 1 and 2).

However, when a film provided in advance is to be laminated and embossed simultaneously as described in Patent Documents 1 and 2, the film needs to be temporarily wound into a roll after it is formed, and therefore, the film needs to have a certain level of strength and thickness so that it can be prevented from being broken or stretched in that process. In addition, the melting point or softening temperature of the film to be used is restricted so that the film can be prevented from being softened and stretched by heat during the embossing.

There is also proposed a method that includes foaming a foaming agent-containing resin layer formed on a paper base material and then forming a surface protective layer by extrusion lamination. In this method, the surface protective layer is formed to improve the stain resistance and scratch resistance of the foamed wallpaper sheet. However, this method has a problem in that after the foaming, a pressure is applied to the foamed resin layer in the lamination of the surface protective layer, so that the foam thickness (expansion ratio) can decrease and cells in the foam can break.

There is also proposed a process that includes placing a high-melting-point resin on a foaming agent-containing resin layer by extrusion lamination and then performing foaming by heating and embossing. However, this process has a problem in that embossing performance can be insufficient. There is also proposed a process that includes placing a low-melting-point resin on a foaming agent-containing resin layer by extrusion lamination. However, this process has a problem in that during foaming by heating, the resin can be softened, and the thickness of the surface protective layer can vary with the pressure of the blowing gas, which can reduce stain resistance.

In view of these conventional techniques, there has been a demand for developing new methods for manufacturing foamed layered sheets having improved stain resistance as compared to conventional foamed wallpaper sheets (foamed layered sheets) and for manufacturing layered sheets useful for the manufacture of such foamed layered sheets.

### PRIOR ART DOCUMENTS

### PATENT DOCUMENTS

Patent Document 1: JP 2001-260287 A
Patent Document 2: JP 2009-72967 A
Patent Document 3: WO2004013404
Patent Document 4: JP2007291599

### SUMMARY OF THE INVENTION

### PROBLEMS TO BE SOLVED BY THE INVENTION

It is a principal object of the invention to provide a new method for manufacturing a foamed layered sheet with improved stain resistance and a new method for manufacturing a layered sheet useful for the manufacture of such a foamed layered sheet.

### MEANS FOR SOLVING THE PROBLEMS

As a result of diligent studies for achieving the object, the inventors have found that a foamed layered sheet with improved stain resistance can be obtained when a surface protective layer including a specific resin component is used in a method for manufacturing a layered sheet including a base material and at least a foaming agent-containing resin layer and a surface protective layer formed in this order on the base material and when the formation of the foaming agent-containing resin layer on the base material, the formation of the surface protective layer on the foaming agent-containing resin layer by extrusion film forming, and the crosslinking of the surface protective layer by electron beam irradiation are sequentially performed in this method. As a result of further studies based on the finding, the invention has been accomplished.

Specifically, the invention provides the methods according to present claims 1 to 9 for manufacturing a layered sheet and a foamed layered sheet.

### EFFECTS OF THE INVENTION

The method of the invention for manufacturing a layered sheet, in which a surface protective layer including the specified resin component is selectively used and steps 1 to 3 are specifically used, makes it possible to manufacture a layered sheet useful as an unfoamed material for a foamed layered sheet with high stain resistance. The method of the invention for manufacturing a layered sheet also makes it possible to impart scratch resistance to the resulting layered sheet.

The conventional techniques have a problem in that in the process of foaming a layered sheet to form a foamed layered sheet, the foam thickness of the foamed resin layer can decrease and cells in the foam can break during the manufacture. In contrast, thanks to the specific features, the method of the invention for manufacturing a layered sheet makes it possible to overcome the disadvantages of the conventional techniques and to improve the efficiency of the manufacture of a foamed layered sheet as a final product.

### MODE FOR CARRYING OUT THE INVENTION

Hereinafter, the methods of the invention for manufacturing a layered sheet and a foamed layered sheet will be described. In the invention, the term "foamed layered sheet" refers to a sheet having a multilayer structure including a base material and at least a foamed resin layer on the base material. The foamed layered sheet may be a product for use as a foamed wallpaper sheet, any of various decorative materials, or the like. The foamed layered sheet is suitable for use as a decorative sheet for use on interior wall surfaces or ceiling surfaces of buildings. In the invention, the term "layered sheet" refers to a sheet having a multilayer structure including a base material and at least a foaming agent-containing resin layer on the base material, which is in a state before the foaming for the formation of the foamed layered sheet and corresponds to what is called an unfoamed material.

### 1. Method for manufacturing layered sheet

The method of the invention for manufacturing a layered sheet is a method for manufacturing a layered sheet including a base material and at least a foaming agent-containing resin layer, a non-foamed resin, layer, and a surface protective layer formed in this order on the base material, wherein the surface protective layer has a monolayer or multilayer structure and includes at least one layer including polyethylene and/or an ethylene copolymer, the method including:
(1) step 1 including forming the foaming agent-containing resin layer and the non-foamed resin layer on the base material;
(2) step 2 including forming the surface protective layer on the non-foamed resin layer by extrusion film forming; and
(3) step 3 including applying an electron beam from the surface protective layer side to crosslink the polyethylene and/or the ethylene copolymer.

Hereinafter, the method of the invention for manufacturing a layered sheet will be described by showing raw materials to be used, operational conditions, and other conditions for each step.

### Step 1

Step 1 includes forming a foaming agent-containing resin layer and a non-foamed resin layer on a base material.

Any base material may be used in the invention. A fibrous base material (backing paper sheet) generally used as a wallpaper base material or the like may be used.

Specifically, the base material may be a common paper sheet for wallpaper (a pulp-based sheet sized with a sizing agent), a flame retardant paper (a pulp-based sheet treated with a flame retardant such as guanidine sulfamate or guanidine phosphate), an inorganic material-containing paper containing an inorganic additive such as aluminum hydroxide or magnesium hydroxide, a woodfree paper, a tissue paper, a fiber mixed paper (a sheet produced by subjecting a mixture of synthetic fibers and pulp to papermaking), or any other fibrous base material. It should be noted that these fibrous base materials are intended to also include materials classified as nonwoven fabrics.

The basis weight of the base material is typically, but not limited to, about 50 to about 300 g/m², preferably about 50 to about 120 g/m².

The foaming agent-containing resin layer may be of any type as long as it includes a resin component and a foaming agent and can be converted to a foamed resin layer by the heating described below, which causes the foaming agent-containing resin layer to be foamed.

As a non-limiting example, the foaming agent-containing resin layer preferably contains, as a resin component, at least one selected from the group consisting of polyethylene and an ethylene copolymer including an ethylene monomer unit and a monomer unit other than an α-olefin monomer unit (hereinafter, abbreviated as the "ethylene copolymer"). The polyethylene and the ethylene copolymer are also advantageous in that they are suitable for extrusion film forming in view of melting point and melt flow rate (MFR) so that they can easily form the foaming agent-containing resin layer.

The polyethylene may be an ethylene homopolymer or a copolymer of ethylene and an α-olefin. The α-olefin used as a comonomer for the copolymer is typically a linear or branched α-olefin of 3 to 20 carbon atoms, preferably 3 to 8 carbon atoms. Examples of the copolymer of ethylene and an α-olefin include high density polyethylene (HDPE) with a density of 0.942 g/cm³ or more, medium density polyethylene (MDPE) with a density of 0.93 g/cm³ to less than 0.942 g/cm³, low density polyethylene (LDPE) with a density of 0.91 g/cm³ to less than 0.93 g/cm³, and linear low density polyethylene (LLDPE) with a density of 0.85 g/cm³ to less than 0.93 g/cm³. These polyethylenes may be used singly or in combination of two or more.

The ethylene copolymer may be, for example, an ethylene copolymer including a comonomer unit derived from a vinyl carboxylate, an α,β-unsaturated carboxylic acid, or an α,β-unsaturated carboxylic ester. Specifically, the vinyl carboxylate may be vinyl acetate or the like. Specifically, the α,β-unsaturated carboxylic acid may be acrylic acid, methacrylic acid, or the like. Specifically, the α,β-unsaturated carboxylic ester may be methyl acrylate, methyl methacrylate, or the like. These comonomers may be used singly or in combination of two or more.

Specifically, the ethylene copolymer may be an ethylene-vinyl acetate copolymer (EVA), an ethylene-methyl methacrylate copolymer (EMMA), an ethylene-ethyl acrylate copolymer (EEA), an ethylene-methyl acrylate copolymer (EMA), an ethylene-(meth)acrylic acid copolymer (EMAA), or the like. These ethylene copolymers may be used singly or in combination of two or more.

The copolymerized comonomer content of the ethylene copolymer is preferably, but not limited to, 5 to 35% by weight, more preferably 5 to 25% by weight, based on the total weight of the ethylene copolymer. When such a copolymerized comonomer content is used, the extrusion film forming performance can be further increased. For example, an ethylene-vinyl acetate copolymer preferably has a copolymerized vinyl acetate content (VA content) of 9 to 25% by weight, more preferably 9 to 20% by weight, based on the total weight of the copolymer. An ethylene-methyl methacrylate copolymer preferably has a copolymerized methyl methacrylate content (MMA content) of 5 to 25% by weight, more preferably 5 to 15% by weight, based on the total weight of the copolymer.

In order to further improve stain resistance and provide high scratch resistance, the foaming agent-containing resin layer preferably contains, as a resin component, polyethylene, an ethylene-vinyl carboxylate copolymer, or an ethylene-α,β-unsaturated carboxylic ester copolymer, more preferably polyethylene, an ethylene-vinyl acetate copolymer, or an ethylene-(meth)acrylic acid copolymer, even more preferably an ethylene-(meth)acrylic acid copolymer (EMAA).

When the ethylene and/or the ethylene copolymer is used as a resin component for the foaming agent-containing resin layer, the foaming agent-containing resin layer may also contain one or more additional resin components other than these resin components. When the ethylene and/or the ethylene copolymer and the additional resin component are used together, they may be used in any ratio. In this case, the ethylene and/or the ethylene copolymer preferably makes up at least 70% by weight, more preferably at least 80% by weight of the total weight of the ethylene and/or the ethylene copolymer and the additional resin component.

The MFR of the polyethylene or the ethylene copolymer is preferably, but not limited to, 7 to 500 g/10 minutes, more preferably 9 to 130 g/10 minutes, for higher extrusion film forming performance. In the invention, MFR is the value measured by the testing method according to JIS K 7210 (method for testing thermoplastic plastic flow). The conditions 190°C and 21.18 N (2.16 kgf) according to JIS K 6760 are used in the test.

A resin composition including, for example, the resin component, a foaming agent, an inorganic filler, a pigment, a foaming aid, and a crosslinking aid is preferably used to form the foaming agent-containing resin layer. Other additives such as a stabilizer and a lubricant may also be used in the resin composition.

The foaming agent for use in the foaming agent-containing layer may be selected from known foaming agents. Examples include thermally-decomposable organic foaming agents such as azo foaming agents such as azodicarbonamide (ADCA) and azobisformamide and hydrazide foaming agents such as oxybenzenesulfonyl hydrazide (OBSH) and p-toluenesulfonyl hydrazide, microcapsule type foaming agents, inorganic foaming agents such as sodium bicarbonate, etc. These foaming agents may be used singly or in combination of two or more.

The content of the foaming agent may be appropriately selected depending on the type of the foaming agent, the expansion ratio, or other factors. Specifically, the content of the foaming agent may be so selected that an expansion ratio of 1.5 or more, preferably about 3 to about 7 can be reached. For example, about 1 to about 20 parts by mass of the foaming agent may be added to 100 parts by mass of the resin component.

Besides the resin component and the foaming agent, if necessary, the foaming agent-containing resin layer may also contain an additive such as an inorganic filler, a pigment, a foaming aid, a crosslinking aid, a stabilizer, or a lubricant.

The foaming aid may be, for example, a metal oxide and/or a metal salt of fatty acid, such as zinc stearate, zinc oxide, or magnesium oxide. These foaming aids may be used singly or in combination of two or more. The content of any of these foaming aids is typically about 0.3 to about 10 parts by mass, preferably about 1 to about 5 parts by mass, based on 100 parts by mass of the resin component. If any of these foaming aids is used in combination with EMAA and an ADCA foaming agent, discoloration or formation of a chromophore may occur in the foaming step, so that yellowing of the foamed resin layer and the base material may tend to be observed. To avoid such a case, a carboxylic acid hydrazide compound should be used as a foaming aid in combination with EMAA and an ADCA foaming agent as described in JP 2009-197219 A. In this case, the carboxylic acid hydrazide compound is preferably used in an amount of about 0.2 to about 1 part by mass based on 1 part by mass of the ADCA foaming agent.

The inorganic filler may be, for example, calcium carbonate, aluminum hydroxide, magnesium hydroxide, antimony trioxide, zinc borate, a molybdenum compound, or the like. The addition of the inorganic filler is effective in suppressing gap control, improving surface properties, and other purposes. These inorganic fillers may be used singly or in combination of two or more. The content of the inorganic filler is typically 0 to about 100 parts by mass, preferably about 20 to about 70 parts by mass, based on 100 parts by mass of the resin component.

The pigment may be any of inorganic and organic pigments. Examples of inorganic pigments include titanium oxide, zinc oxide, carbon black, black iron oxide, yellow iron oxide, chrome yellow, molybdate orange, cadmium yellow, nickel titanium yellow, chromium titanium yellow, iron oxide (red iron oxide), cadmium red, ultramarine, Prussian blue, cobalt blue, chromium oxide, cobalt green, aluminum powder, bronze powder, mice titanium, zinc sulfide, etc. Examples of organic pigments include aniline black, perylene black, azo pigments (azo lake, insoluble azo, and condensed azo pigments), polycyclic pigments (isoindolinone, isoindolin, quinophthalone, perinone, flavanthrone, anthrapyrimidine, anthraquinone, quinacridone, perylene, diketopyrrolopyrrole, dibromo-anthanthrone, dioxazine, thioindigo, phthalocyanine, indanthrone, and halogenated phthalocyanine), etc. These pigments may be used singly or in combination of two or more. The content of the pigment is typically about 10 to about 50 parts by mass, preferably about 15 to about 30 parts by mass, based on 100 parts by mass of the resin component.

The thickness of the foaming agent-containing resin layer may be, for example, about 40 to about 100 µm although it may be appropriately selected taking into account the desired thickness of the foamed resin layer, the expansion ratio, and other factors.

The foaming agent-containing layer may be formed by applying, to the base material, a resin composition including the resin component, the foaming agent, and the optional additive or additives. The method for applying the resin composition to the base material is preferably, but not limited to, extrusion film forming (extrusion lamination) using a T-die extruder. During the extrusion film forming, the cylinder temperature and the die temperature are generally about 100 to about 140°C although they may be appropriately selected depending on the resin type.

In the step of forming the foaming agent-containing resin layer according to the invention, a non-foamed resin layer or layers is provided on one or both surfaces of the foaming agent-containing layer.

For example, a non-foamed resin layer B (adhesive resin layer) for improving adhesive strength to the base material may be provided on the back surface of the foaming agent-containing resin layer (between the base material and the foaming agent-containing resin layer).

The resin component of the non-foamed resin layer B is preferably, but not limited to, an ethylene-vinyl acetate copolymer (EVA). Any known or commercially available EVA may be used. Specifically, the ethylene-vinyl acetate copolymer is preferably such that the content of the vinyl acetate component (VA component) is 10 to 46% by weight, more preferably 15 to 41% by weight, based on the total weight of the copolymer.

The thickness of the non-foamed resin layer B is typically, but not limited to, about 5 to about 50 µm.

A non-foamed resin layer A is provided on the front surface of the foaming agent-containing resin layer (the surface opposite to the base material). The non-foamed resin layer A is provided, for example, to improve the scratch resistance of the foamed resin layer or to make a design or a pattern clear in the formation of a picture pattern layer.

The resin component of the non-foamed resin layer A may be, for example, polyolefin resin, methacrylic resin, thermoplastic polyester resin, polyvinyl alcohol resin, fluororesin, or the like. Among them, polyolefin resin is preferred.

The polyolefin resin may be, for example, at least one of a single resin such as an ethylene homopolymer, polypropylene, polybutene, polybutadiene, or polyisoprene, a copolymer of ethylene and an α-olefin of 4 or more carbon atoms (such as linear low density polyethylene), ethylene (meth)acrylic copolymer resin such as ethylene-acrylic acid copolymer resin, ethylene-methyl acrylate copolymer resin, ethylene-ethyl acrylate copolymer resin, or ethylene-methacrylic acid copolymer resin, an ethylene-vinyl acetate copolymer (EVA), saponified ethylene-vinyl acetate copolymer resin, ionomer resin, and other resins.

The thickness of the non-foamed resin layer A is typically, but not limited to, about 5 to about 50 µm.

In a preferred mode of the invention, the non-foamed resin layer B, the foaming agent-containing resin layer, and the non-foamed resin layer A are formed in this order.

The foaming agent-containing resin layer with a non-foamed resin layer or layers on its one or both surfaces is preferably formed by co-extrusion film forming using a T-die extruder. For example, the foaming agent-containing resin layer with non-foamed resin layers on its both surfaces may be formed using a multi-manifold type T die, with which three layers can be formed at the same time by co-extruding resin melts for the three layers.

When the foaming agent-containing resin layer is formed by extrusion film forming using a resin composition containing an inorganic filler, an inorganic filler residue (what is called eye mucus) can easily occur at the outlet (what is called a die) of the extruder and tend to form contaminants on the surface of the foaming agent-containing resin layer. To avoid such a case, three-layer co-extrusion film forming is preferably performed as described above. Specifically, the non-foamed resin layers and the foaming agent-containing resin layer sandwiched therebetween may be formed by co-extrusion film forming so that what is called eye mucus can be prevented.

In the invention, if necessary, step 1 may further include forming a picture pattern layer on the foaming agent-containing resin layer (or the non-foamed resin layer A).

The picture pattern layer imparts design characteristics to the resin laminate. Examples of the design or pattern include wood grain patterns, rift patterns, sand grain patterns, tiling patterns, brickwork patterns, fabric texture patterns, leather grain patterns, geometric figures, letters, symbols, abstract patterns, etc. The design or pattern may be selected depending on foamed wallpaper type.

The picture pattern layer can be formed by, for example, printing a design or pattern with printing ink. The printing method may be, for example, gravure printing, flexographic printing, silk screen printing, offset printing, or the like. The printing ink may be an ink composition including a colorant, a binder resin, and a solvent. The printing ink may also be a known or commercially available product.

A pigment such as one used in the foaming agent-containing resin layer may be appropriately used as the colorant in the printing ink.

The binder resin used in the printing ink may be selected depending on the type of the base material sheet. Examples of the binder resin include acrylic resin, styrene resin, polyester resin, urethane resin, chlorinated polyolefin resin, vinyl chloride-vinyl acetate copolymer resin, polyvinyl butyral resin, alkyd resin, petroleum resin, ketone resin, epoxy resin, melamine resin, fluororesin, silicone resin, cellulose derivatives, rubber resin, etc. These binder resins may be used singly or in combination of two or more.

Examples of the solvent (or dispersion medium) used in the printing ink include petroleum organic solvents such as hexane, heptane, octane, toluene, xylene, ethylbenzene, cyclohexane, and methylcyclohexane; ester organic solvents such as ethyl acetate, butyl acetate, 2-methoxyethyl acetate, and 2-ethoxyethyl acetate; alcohol organic solvents such as methyl alcohol, ethyl alcohol, n-propyl alcohol, isopropyl alcohol, isobutyl alcohol, ethylene glycol, and propylene glycol; ketone organic solvents such as acetone, methyl ethyl ketone, methyl isobutyl ketone, and cyclohexanone; ether organic solvents such as diethyl ether, dioxane, and tetrahydrofuran; chlorinated organic solvents such as dichloromethane, carbon tetrachloride, trichloroethylene, and tetrachloroethylene; water, etc. These solvents (or dispersion media) may be used singly or in combination of two or more.

The thickness of the picture pattern layer is generally about 0.1 to about 10 µm although it may be appropriately selected depending on the design or pattern type or other conditions.

### Step 2

Step 2 includes forming the surface protective layer on the non-foamed resin layer A (or the picture pattern layer, if formed) by extrusion film forming.

In the invention, the surface protective layer has a monolayer or multilayer structure and includes at least one layer including polyethylene and/or an ethylene copolymer.

In the invention, when the surface protective layer has a multilayer structure, at least a layer disposed on the base material side (specifically, the lowermost layer disposed on the foaming agent-containing resin layer side among the two or more layers) preferably includes polyethylene and/or an ethylene copolymer. When a layer including polyethylene and/or an ethylene copolymer is disposed as the lowermost layer and crosslinked with an electron beam, the resulting resin layer can have improved melt tension, so that during the foaming, gas generated from the foaming layer can be efficiently prevented from passing through. Therefore, when a layer including polyethylene and/or an ethylene copolymer is disposed as the lowermost layer, the resulting surface protective layer itself can have stain resistance even though a resin with relatively low melt tension (such as polypropylene) is deposited on the lowermost layer.

The polyethylene used in the surface protective layer may be an ethylene homopolymer or a copolymer of ethylene and an α-olefin. The α-olefin used as a comonomer for the copolymer is typically a linear or branched α-olefin of 3 to 12 carbon atoms, preferably 3 to 8 carbon atoms. Examples of the copolymer of ethylene and an α-olefin include high density polyethylene (HDPE) with a density of 0.942 g/cm³ or more, medium density polyethylene (MDPE) with a density of 0.93 g/cm³ to less than 0.942 g/cm³, low density polyethylene (LDPE) with a density of 0.91 g/cm³ to less than 0.93 g/cm³, and very low density polyethylene (LLDPE) with a density of 0.85 g/cm³ to 0.91 g/cm³. Among these polyethylenes, low-density polyethylene is preferably used so that curling of the foamed layered sheet can be suppressed.

The middle density polyethylene may also be prepared by blending high density polyethylene and low density polyethylene. In this case, as a non-limiting example, high density polyethylene and low density polyethylene may be blended, for example, in a mass ratio of more than 0 to 8 : 2 to 10 (high density polyethylene : low density polyethylene).

The polyethylene used in the surface protective layer may also be acid-modified polyethylene, which is produced by modifying polyethylene with an unsaturated carboxylic acid or an anhydride thereof by addition reaction, graft reaction, or the like. Examples of the unsaturated carboxylic acid and the anhydride thereof used in the modification of polyethylene include maleic acid, itaconic acid, maleic anhydride, itaconic anhydride, etc. Among them, maleic anhydride and an anhydride thereof are preferred, and maleic anhydride is more preferred. These unsaturated carboxylic acids and anhydrides thereof may be used singly or in combination of two or more.

These polyethylenes may be used singly or in combination of two or more.

The ethylene copolymer used in the surface protective layer may be, for example, an ethylene copolymer including a comonomer unit derived from a vinyl carboxylate, an α,β-unsaturated carboxylic acid, or an α,β-unsaturated carboxylic ester. Specifically, the vinyl carboxylate may be vinyl acetate or the like. Specifically, the α,β-unsaturated carboxylic acid may be acrylic acid, methacrylic acid, or the like. Specifically, the α,β-unsaturated carboxylic ester may be methyl acrylate, methyl methacrylate, or the like. These comonomers may be used singly or in combination of two or more.

Specifically, the ethylene copolymer used in the surface protective layer may be ethylene-(meth)acrylic copolymer resin such as ethylene-acrylic acid copolymer resin, ethylene-methyl acrylate copolymer resin, ethylene-ethyl acrylate copolymer resin, or ethylene-methacrylic acid copolymer resin, an ethylene-vinyl acetate copolymer (EVA), saponified ethylene-vinyl acetate copolymer resin, ionomer resin, or the like.

The copolymerized comonomer content of the ethylene copolymer is preferably, but not limited to, 2 to 35% by weight, more preferably 4 to 25% by weight, based on the total weight of the ethylene copolymer. More specifically, an ethylene-methyl methacrylate copolymer preferably has a copolymerized methyl methacrylate content (MMA content) of 5 to 25% by weight, more preferably 5 to 15% by weight, based on the total weight of the copolymer. An ethylene-vinyl acetate copolymer preferably has, a copolymerized vinyl acetate content (VA content) of 9 to 25% by weight, more preferably 9 to 20% by weight, based on the total weight of the copolymer.

These ethylene copolymers may be used singly or in combination of two or more.

The MFR of the polyethylene and/or the ethylene copolymer used in the surface protective layer is generally, but not limited to, 1 to 100 g/10 minutes, preferably 5 to 30 g/10 minutes, for higher extrusion film forming performance.

The surface protective layer only has to include at least one layer including at least one of the polyethylene and the ethylene copolymer as a resin component. In order to further improve stain resistance, the polyethylene and the ethylene copolymer are preferably at least one of polyethylene and an ethylene-α,β-unsaturated carboxylic ester copolymer, more preferably at least one of polyethylene and an ethylene-methacrylic acid copolymer (EMAA), even more preferably at least one of acid-modified polyethylene and an ethylene-methacrylic acid copolymer (EMAA).

In the surface protective layer, the layer including the polyethylene and/or the ethylene copolymer may further contain any other additional resin component as long as the effects of the invention are not impaired. The content ratio of the polyethylene and/or the ethylene copolymer to the additional resin component may be, for example, such that the content of the polyethylene and/or the ethylene copolymer is 50 to 100% by weight, preferably 60 to 100% by weight, based on the total amount of the polyethylene and/or the ethylene copolymer and the additional resin component.

To form the surface protective layer with a multilayer structure, two or more layers each including polyethylene and/or an ethylene copolymer may be provided, or one or more resin layers other than the layer including polyethylene and/or an ethylene copolymer may also be provided. When the surface protective layer with a multilayer structure also includes a resin layer other than the layer including polyethylene and/or an ethylene copolymer, the resin component of such a resin layer may be, for example, polyolefin resin other than polyethylene and/or an ethylene copolymer, methacrylic resin, polyvinyl alcohol resin, fluororesin, or the like. Among these resins, polyolefin resin other than polyethylene and/or an ethylene copolymer is preferred. Such polyolefin resin may be, for example, a single resin such as polypropylene, polybutene, polybutadiene, or polyisoprene.

The thickness of the surface protective layer is typically, but not limited to, about 3 to about 25 µm, preferably about 5 to about 20 µm. When the surface protective layer has a multilayer structure, each layer preferably has a thickness of about 5 to about 15 µm.

In particular, the surface protective layer with a multilayer structure is preferably formed by extrusion film forming using a T-die extruder. For example, the surface protective layer with a two-layer structure may be formed using a multi-manifold type T-die, with which two layers can be formed at the same time by co-extruding resin melts for the two layers.

If necessary, in order to enhance the scratch resistance, the surface state and the like, the top of the surface protective layer (namely, the outermost surface opposite to the base material side) may be provided with one or more coating layers including curable resin such as room temperature-curable resin, thermosetting resin, ionizing radiation-curable resin, reactive one-component curable resin, reactive two-component curable resin, or ionizing radiation-curable resin.

### Step 3

Step 3 includes applying an electron beam from the surface protective layer side to crosslink the polyethylene and/or the ethylene copolymer in the surface protective layer. The application of such an electron beam for crosslinking makes it possible to improve the heat resistance of the layer including the polyethylene and/or the ethylene copolymer and to impart a high level of stain resistance and scratch resistance to the foamed layered sheet to be finally obtained.

The energy of the applied electron beam is typically about 150 to about 250 kV, preferably about 175 to about 200 kV. The electron beam is typically applied at a dose of about 10 to about 100 kGy, preferably about 10 to about 50 kGy. Any known electron beam irradiator may be used as a source of the electron beam. The electron beam irradiation is effective in improving heat resistance.

In step 3 according to the invention, the foaming agent-containing resin layer may also be crosslinked. When the foaming agent-containing resin layer is also crosslinked, the surface strength, foam properties, and other properties of the foamed resin layer can be controlled. In this step, only the surface protective layer may be crosslinked. In this case, there is no need to crosslink the foaming agent-containing resin layer under the surface protective layer, and thus there is no need to allow the electron beam to penetrate deeply, so that the acceleration voltage can be reduced.

After steps 1 to 3 described above, the layered sheet according to the invention is obtained.

### 2. Method for manufacturing foamed layered sheet

The method of the invention for manufacturing a foamed layered sheet includes steps 1 to 3 described above and step 4 including heating the layered sheet to convert the foaming agent-containing resin layer to a foamed resin layer.

The heating may be performed under any conditions where the foaming agent is decomposed so that the foaming agent-containing resin layer is converted to a foamed resin layer. The heating temperature may be, for example, about 210 to about 240°C, and the heating time may be, for example, about 20 to about 80 seconds. The heating may be performed using a known heating furnace or gear oven.

The thickness of the foamed resin layer after the foaming is typically, but not limited to, about 300 to about 700 µm.

In the method of the invention for manufacturing a foamed layered sheet, if necessary, step 4 described above may be followed by step 5 including performing embossing on the outermost surface layer.

The embossing may be performed using known means such as an embossing plate. Specifically, the surface resin layer may be softened by heating, and then an embossing plate may be pressed against the softened surface resin layer so that a desired embossed pattern can be formed. The embossed pattern may be, for example, wood grain trachea grooves, slate surface texture, fabric surface texture, crepe, sand grain, hairline, line grooves, or the like.

After steps 1 to 4 described above and optionally step 5, the foamed layered sheet according to the invention is obtained.

### EXAMPLES

Hereinafter, the invention will be more specifically described with reference to examples and comparative examples. It will be understood that the examples are not intended to limit the invention.

### Example 1

A stack of a non-foamed resin layer A with a thickness of 8 µm, a foaming agent-containing resin layer with a thickness of 60 µm, and a non-formed resin layer B (adhesive resin layer) with a thickness of 8 µm was formed by extrusion using a three-type, three-layer, multi-manifold T-die extruder. The extrusion conditions were such that the cylinder temperature and the die temperature were all 120°C for each layer. Subsequently, a backing paper sheet (NI-65A manufactured by Nippon Paper Industries Co., Ltd.) was placed on the surface of the non-foamed resin layer B with a surface temperature of 120°C through lamination rollers.

In the above process, the raw material used for the non-foamed resin layer A was an ethylene-methacrylic acid copolymer (NUCREL N1560 manufactured by DUPONT-MITSUI POLYCHEMICALS CO., LTD., 60 g/10 minutes in MFR, 15% by weight in MAA content). The raw materials shown in Table 1 below were used for the foaming agent-containing resin layer. The raw material used for the non-foamed resin layer B was an ethylene-vinyl acetate copolymer (EVAFLEX EV150 manufactured by DUPONT-MITSUI POLYCHEMICALS CO., LTD., 33% by weight in vinyl acetate content).

**[Table 1]**

| Materials for foaming agent-containing resin layer | Product name, etc. | Content |
|---|---|---|
| EMAA resin | MFR = 100 g/10 minutes | 100 parts by mass |
| | MMA content: 11 wt% | |
| | NUCREL N1110H | |
| | manufactured by DUPONT-MITSUI POLYCHEMICALS CO., LTD. | |
| Calcium carbonate | Whiton H | 30 parts by mass |
| | Toyo Fine Chemical Co., Ltd. | |
| Titanium dioxide | TIPAQUE CR-63 | 20 parts by mass |
| | ISHIHARA SANGYO KAISHA, LTD. | |
| Foaming agent | VINYFOR AC#3 | 5 parts by mass |
| | manufactured by EIWA CHEMICAL IND. CO., LTD. | |
| Foaming aid | ADHS | 4 parts by mass |
| | Otsuka Chemical Co., Ltd. | |

Subsequently, a corona discharge treatment was performed on the non-foamed resin layer A. Using a gravure printing machine to print the design or pattern, a fabric texture pattern was further printed with water-based ink (HYDRIC manufactured by Dainichiseika Color & Chemicals Mfg. Co., Ltd.) on the non-foamed resin layer A. The non-foamed resin layer A was then coated with a water-based heat sealing agent (HT-600W (K) HYDRIC manufactured by Dainichiseika Color & Chemicals Mfg. Co., Ltd.).

Subsequently, a stack of a surface protective layer (upper layer) with a thickness of 7 µm and a surface protective layer (lower layer) with a thickness of 3 µm was placed on the non-foamed resin layer A by co-extrusion film forming using a two-type, two-layer, multi-manifold T-die extruder. The extrusion conditions were such that the cylinder temperature and the die temperature were both 250°C for the upper and lower surface resin layers.

The raw material used for the surface protective layer (upper layer) was low density polyethylene (LDPE) (NOVATEC LC600A manufactured by Japan Polyethylene Corporation, 7 g/10 minutes in MFR). The raw material used for the surface protective layer (lower layer) was modified ethylene-(meth)acrylic acid polymer resin (EMAA) (AN4228C manufactured by DUPONT-MITSUI POLYCHEMICALS CO., LTD., 14 g/10 minutes in MFR, 4% by weight in MAA content).

Subsequently, an electron beam (irradiation conditions: 195 kV, 30 kGy) was applied from above the surface protective layer to crosslink the foaming agent-containing resin layer and the surface protective layers, so that a layered sheet was obtained.

Subsequently, the foaming agent-containing resin layer was foamed in such a way that the entire thickness of the layered sheet reached 580 µm, while the layered sheet was heated in an oven (220°C, 35 seconds). The product was then subjected to fabric texture embossing, so that a foamed layered sheet was obtained.

### Example 2

A foamed layered sheet was prepared as in Example 1, except that high density polyethylene (HDPE) (NOVATEC HF560 manufactured by Japan Polyethylene Corporation, 7 g/10 minutes in MFR) was used instead to form the surface protective layer (upper layer).

### Example 3

A foamed layered sheet was prepared as in Example 1, except that middle density polyethylene (MDPE) (NOVATEC HC170 manufactured by Japan Polyethylene Corporation, 10 g/10 minutes in MFR) was used instead to form the surface protective layer (upper layer).

### Example 4

A foamed layered sheet was prepared as in Example 1, except that polypropylene (PP) (NOVATEC FL03H manufactured by Japan Polypropylene Corporation, 20 g/10 minutes in MFR) was used instead to form the surface protective layer (upper layer) and acid-modified polyethylene (acid-modified PE) (MODIC M545 manufactured by Mitsubishi Chemical Corporation, 6 g/10 minutes in MFR) was used instead to form the surface protective layer (lower layer).

### Example 5

A foamed layered sheet was prepared as in Example 1, except that middle density polyethylene (MDPE) (NOVATEC HC170 manufactured by Japan Polyethylene Corporation, 10 g/10 minutes in MFR) was used instead to form the surface protective layer (upper layer) and acid-modified polyethylene (acid-modified PE) (MODIC M545 manufactured by Mitsubishi Chemical Corporation, 6 in MFR) was used instead to form the surface protective layer (lower layer).

### Example 6

A foamed layered sheet was prepared as in Example 1, except that the surface protective layer was a monolayer structure (10 µm) of low density polyethylene (LDPE) (NOVATEC LC600A manufactured by Japan Polyethylene Corporation, 7 g/10 minutes in MFR).

### Example 7

A foamed layered sheet was prepared as in Example 1, except that polypropylene (PP) (NOVATEC FL03H manufactured by Japan Polypropylene Corporation, 20 g/10 minutes in MFR) was used instead to form the surface protective layer (upper layer).

### Example 8

A foamed layered sheet was prepared as in Example 1, except that polypropylene (PP) (WINTEC WSX02 manufactured by Japan Polypropylene Corporation, 25 g/10 minutes in MFR) was used instead to form the surface protective layer (upper layer).

### Comparative Example 1

A foamed layered sheet was prepared as in Example 1, except that the foaming agent-containing resin layer was foamed without the application of an electron beam to the surface protective layer.

### Comparative Example 2

A foamed layered sheet was prepared as in Example 3, except that the foaming agent-containing resin layer was foamed without the application of an electron beam to the surface protective layer.

### Comparative Example 3

A foamed layered sheet was prepared as in Example 7, except that the foaming agent-containing resin layer was foamed without the application of an electron beam to the surface protective layer.

### Comparative Example 4

A foamed layered sheet was prepared as in Example 8, except that the foaming agent-containing resin layer was foamed without the application of an electron beam to the surface protective layer.

### Comparative Example 5

A foamed layered sheet was prepared as in Example 1, except that no surface protective layer was provided.

### Comparative Example 6

A foamed layered sheet was prepared as in Example 1, except that an electron beam was applied to the foaming agent-containing resin layer and then no electron beam was applied to the surface protective layer.

### Comparative Example 7

A foamed layered sheet was prepared as in Example 1, except that the surface protective layer was a monolayer structure of polypropylene (PP) (NOVATEC FL03H manufactured by Japan Polypropylene Corporation, 20 g/10 minutes in MFR).

The characteristics of the foamed layered sheets prepared in the examples and the comparative examples were evaluated.

### Test Example 1 (surface state)

The cross section of each foamed layered sheet was observed with an optical microscope. The following evaluation criteria were used.
Good 1: The surface protective layer has no depression (no thinner part).
Good 2: The surface protective layer has a depressed thinner part (but the adjacent lower layer is not exposed).
Poor: The surface protective layer has a depression, and the adjacent lower layer is exposed.

### Test Example 2 (stain resistance)

<1> According to SV method, the surface was stained with red crayon and allowed to stand for 24 hours. The stain was then removed with a neutral detergent.
<2> The surface of the wallpaper sheet was stained with a permanent black marker and then allowed to stand for 24 hours. The stain was then removed with ethanol.

After the tests <1> and <2>, an evaluation was made according to the following criteria.
○ : No stain of red crayon or permanent black marker remains.
△ : A slight stain of red crayon and/or permanent black marker remains.
× : Stains of red crayon and permanent black marker remain.

Table 2 shows the results of the examples, and Table 3 shows the results of the comparative examples. The results show that when polyethylene or an ethylene copolymer was used to form at least one surface protective layer and the surface protective layer was crosslinked with an electron beam, the resulting sheet successfully had high stain resistance (Examples 1 to 8). In contrast, when the surface protective layer was not crosslinked with an electron beam, the resulting sheet had insufficient stain resistance even though polyethylene or an ethylene copolymer was used to form at least one surface protective layer (Comparative Examples 1 to 4 and 6). Also when polypropylene was used to form the surface protective layer, the resulting sheet had insufficient stain resistance even though the surface protective layer was crosslinked with an electron beam (Comparative Example 7). The foamed layered sheets obtained in Examples 1 to 8 had a good surface state, whereas the foamed layered sheets obtained in Comparative Examples 1 to 7 all had a poor surface state.

**[Table 2]**

| | Examples | | | | | | | |
|---|---|---|---|---|---|---|---|---|
| | 1 | 2 | 3 | 4 | 5 | 6 | 7 | 8 |
| Surface protective layer (upper side) | LDPE | HDPE | MDPE | PP | MDPE | LDPE | PP | PP |
| Surface protective layer (lower side) | EMAA | EMAA | EMAA | Acid-mo dified PE | Acid-mo dified PE | | EMAA | EMAA |
| Presence or absence of electron beam crosslinking | Present | Present | Present | Present | Present | Present | Present | Present |
| Surface state of surface protective layer | Good 1 | Good 1 | Good 1 | Good 1 | Good 1 | Good 1 | Good 2 | Good 2 |
| Stain resistance | ○ | ○ | ○ | ○ | ○ | ○ | Δ | Δ |

**[Table 3]**

| | Comparative Examples | | | | | | |
|---|---|---|---|---|---|---|---|
| | 1 | 2 | 3 | 4 | 5 | 6 | 7 |
| Surface protective layer (upper side) | LDPE | MDPE | PP | PP | - | LDPE | PP |
| Surface protective layer (lower side) | EMAA | EMAA | EMAA | Acid-modified PE | - | EMAA | |
| Presence or absence of electron beam crosslinking | Absent | Absent | Absent | Absent | Present | Absent | Present |
| Surface state of surface protective layer | Poor | Poor | Poor | Poor | - | Poor | Poor |
| Stain resistance | × | × | × | × | × | × | × |

## Claims

1. A method for manufacturing a layered sheet comprising a base material and at least a foaming agent-containing resin layer, a non-foamed resin layer, and a surface protective layer formed in this order on the base material, wherein
the surface protective layer has a monolayer or multilayer structure and comprises at least one layer comprising polyethylene and/or an ethylene copolymer,
the method comprising:
(1) step 1 comprising forming the foaming agent-containing resin layer and the non-foamed resin layer on the base material;
(2) step 2 comprising forming the surface protective layer on the non-foamed resin layer by extrusion film forming; and
(3) step 3 comprising applying an electron beam from the surface protective layer side to crosslink the polyethylene and/or the ethylene copolymer.

2. The method for manufacturing a layered sheet according to claim 1, wherein the surface protective layer has a multilayer structure in which at least a layer disposed on the base material side is the layer comprising polyethylene and/or an ethylene copolymer.

3. The method for manufacturing a layered sheet according to claim 1 or 2,
wherein the ethylene copolymer comprises a comonomer unit derived from at least one selected from the group consisting of a vinyl carboxylate, an α,β-unsaturated carboxylic acid, and an α,β-unsaturated carboxylic ester.

4. The method for manufacturing a layered sheet according to any one of claims 1 to 3, wherein the layer comprising polyethylene and/or an ethylene copolymer comprises at least one selected from the group consisting of polyethylene and an ethylene-methacrylic acid copolymer.

5. The method for manufacturing a layered sheet according to any one of claims 1 to 4, wherein in the step 3, the foaming agent-containing resin layer is also crosslinked by applying an electron beam from the surface protective layer side.

6. The method for manufacturing a layered sheet according to any one of claims 1 to 5, wherein in the step 1, a non-foamed resin layer, the foaming agent-containing resin layer, and a non-foamed resin layer are formed in this order on the base material.

7. The method for manufacturing a layered sheet according to any one of claims 1 to 6, wherein the step 1 further comprises forming a picture pattern layer on the foaming agent-containing resin layer or the non-foamed resin layer.

8. A method for manufacturing a foamed layered sheet comprising a base material and at least a foamed resin layer, a non-foamed resin layer, and a surface protective layer formed in this order on the base material, wherein
the surface protective layer has a monolayer or multilayer structure and comprises at least one layer comprising polyethylene and/or an ethylene copolymer,
the method comprising:
(1) step 1 comprising forming a foaming-agent containing resin layer and the non-foamed resin layer on the base material;
(2) step 2 comprising forming the surface protective layer on the non-foamed resin layer by extrusion film forming;
(3) step 3 comprising applying an electron beam from the surface protective layer side to crosslink the polyethylene and/or the ethylene copolymer, so that a layered sheet is obtained; and
(4) step 4 comprising heating the layered sheet obtained in the step 3 to convert the foaming agent-containing resin layer to a foamed resin layer.

9. The method for manufacturing a foamed layered sheet according to claim 8, further comprising step 5 comprising performing embossing on an outermost surface layer after the step 4.

## Patentansprüche

1. Verfahren zur Herstellung eines Schichtenbogens, umfassend ein Grundmaterial und mindestens eine schaummittelhaltige Harzschicht, eine ungeschäumte Harzschicht und eine Oberflächenschutzschicht, gebildet in dieser Reihenfolge auf dem Grundmaterial, wobei
die Oberflächenschutzschicht eine Einzellagen- oder Mehrlagenstruktur hat und mindestens eine Schicht, umfassend Polyethylen und/oder ein Ethylencopolymer, umfasst,
das Verfahren umfassend:
(1) Schritt 1, umfassend das Bilden der schaummittelhaltigen Harzschicht und der ungeschäumten Harzschicht auf dem Grundmaterial;
(2) Schritt 2, umfassend das Bilden der Oberflächenschutzschicht auf der ungeschäumten Harzschicht durch Extrusionsfilmbildung; und
(3) Schritt 3, umfassend das Anwenden eines Elektronenstrahls von der Oberflächenschutzschichtsseite, um das Polyethylen und/oder das Ethylencopolymer zu vernetzen.

2. Verfahren zur Herstellung eines Schichtenbogens nach Anspruch 1, wobei die Oberflächenschutzschicht eine Mehrlagenstruktur hat, in der mindestens eine Schicht, angeordnet auf der Grundmaterialseite, die Schicht ist, die Polyethylen und/oder ein Ethylencopolymer umfasst.

3. Verfahren zur Herstellung eines Schichtenbogens nach Anspruch 1 oder 2, wobei das Ethylencopolymer eine Comonomereinheit, abgeleitet von mindestens einem, ausgewählt aus der Gruppe, bestehend aus einem Vinylcarboxylat, einer α,β-ungesättigten Carbonsäure und einem α,β-ungesättigten Carbonsäureester, umfasst.

4. Verfahren zur Herstellung eines Schichtenbogens nach einem der Ansprüche 1 bis 3, wobei die Schicht, die Polyethylen und/oder ein Ethylencopolymer umfasst, mindestens eines, ausgewählt aus der Gruppe, bestehend aus Polyethylen und einem Ethylen-Methacrylsäure-Copolymer, umfasst.

5. Verfahren zur Herstellung eines Schichtenbogens nach einem der Ansprüche 1 bis 4, wobei in dem Schritt 3 auch die schaummittelhaltige Harzschicht durch Anwenden eines Elektronenstrahls von der Oberflächenschutzschichtsseite vernetzt wird.

6. Verfahren zur Herstellung eines Schichtenbogens nach einem der Ansprüche 1 bis 5, wobei in dem Schritt 1 eine ungeschäumte Harzschicht, die schaummittelhaltige Harzschicht und eine ungeschäumte Harzschicht in dieser Reihenfolge auf dem Grundmaterial gebildet werden.

7. Verfahren zur Herstellung eines Schichtenbogens nach einem der Ansprüche 1 bis 6, wobei der Schritt 1 weiter das Bilden einer Bildmusterschicht auf der schaummittelhaltigen Harzschicht oder der ungeschäumten Harzschicht umfasst.

8. Verfahren zur Herstellung eines geschäumten Schichtenbogens, umfassend ein Grundmaterial und mindestens eine geschäumte Harzschicht, eine ungeschäumte Harzschicht und eine Oberflächenschutzschicht, gebildet in dieser Reihenfolge auf dem Grundmaterial, wobei
die Oberflächenschutzschicht eine Einzellagen- oder Mehrlagenstruktur hat und mindestens eine Schicht, umfassend Polyethylen und/oder ein Ethylencopolymer, umfasst,
das Verfahren umfassend:
(1) Schritt 1, umfassend das Bilden einer schaummittelhaltigen Harzschicht und der ungeschäumten Harzschicht auf dem Grundmaterial;
(2) Schritt 2, umfassend das Bilden der Oberflächenschutzschicht auf der ungeschäumten Harzschicht durch Extrusionsfilmbildung;
(3) Schritt 3, umfassend das Anwenden eines Elektronenstrahls von der Oberflächenschutzschichtsseite, um das Polyethylen und/oder das Ethylencopolymer zu vernetzen, so dass ein Schichtenbogen erhalten wird; und
(4) Schritt 4, umfassend das Erwärmen des in dem Schritt 3 erhaltenen Schichtenbogens, um die schaummittelhaltige Harzschicht in eine geschäumte Harzschicht umzuwandeln.

9. Verfahren zur Herstellung eines geschäumten Schichtenbogens nach Anspruch 8, weiter umfassend Schritt 5, umfassend das Durchführen von Prägen an einer äußersten Oberflächenschicht nach dem Schritt 4.

## Revendications

1. Procédé de préparation d'une feuille à couches comprenant un matériau de base et au moins une couche de résine contenant un agent moussant, une couche de résine non moussée, et une couche protectrice de surface formées en cet ordre sur le matériau de base, où
la couche protectrice de surface présente une structure monocouche ou multicouche et comprend au moins une couche comprenant du polyéthylène et/ou un copolymère d'éthylène,
le procédé comprenant :
(1) une étape 1 comprenant la formation de la couche de résine contenant l'agent moussant et la couche de résine non moussée sur le matériau de base ;
(2) une étape 2 comprenant la formation de la couche protectrice de surface sur la couche de résine non moussée par formation de film par extrusion, et
(3) une étape 3 comprenant l'application d'un faisceau d'électrons par la face de la couche protectrice de surface afin de réticuler le polyéthylène et/ou le copolymère d'éthylène.

2. Procédé de préparation d'une feuille à couches selon la revendication 1, où la couche protectrice de surface présente une structure multicouche dans laquelle au moins une couche disposée sur le côté du matériau de base est la couche comprenant du polyéthylène et/ou un copolymère d'éthylène.

3. Procédé de préparation d'une feuille à couches selon la revendication 1 ou 2, où le copolymère d'éthylène comprend une unité comonomère dérivée d'au moins l'un parmi le groupe consistant en un carboxylate de vinyle, un acide carboxylique α,β-insaturé et un ester carboxylique α,β-insaturé.

4. Procédé de préparation d'une feuille à couches selon l'une quelconque des revendications 1 à 3, où la couche comprenant le polyéthylène et/ou un copolymère d'éthylène comprend au moins l'un choisi parmi le groupe consistant en du polyéthylène et un copolymère d'éthylène-acide méthacrylique.

5. Procédé de préparation d'une feuille à couches selon l'une quelconque des revendications 1 à 4, où dans l'étape 3, la couche de résine contenant un agent moussant est également réticulée par application d'un faisceau d'électrons par la face de la couche protectrice de surface.

6. Procédé de préparation d'une feuille à couches selon l'une quelconque des revendications 1 à 5, où dans l'étape 1, une couche de résine non moussée, la couche de résine contenant l'agent moussant, et une couche de résine non moussée sont formées en cet ordre sur le matériau de base.

7. Procédé de préparation d'une feuille à couches selon l'une quelconque des revendications 1 à 6, où l'étape 1 comprend en outre, la formation d'une couche de motifs sur la couche de résine contenant l'agent moussant ou la couche de résine non moussée.

8. Procédé de préparation d'une feuille à couches moussée comprenant un matériau de base et au moins une couche de résine moussée, une couche de résine non moussée, et une couche protectrice de surface formées en cet ordre sur le matériau de base, où
la couche protectrice de surface présente une structure monocouche ou multicouche et comprend au moins une couche comprenant du polyéthylène et/ou un copolymère d'éthylène,
le procédé comprenant :
(1) une étape 1 comprenant la formation d'une couche de résine contenant un agent moussant et la couche de résine non moussée sur le matériau de base ;
(2) une étape 2 comprenant la formation de la couche protectrice de surface sur la couche de résine non moussée par formation de film par extrusion, et
(3) une étape 3 comprenant l'application d'un faisceau d'électrons par la face de la couche protectrice de surface afin de réticuler le polyéthylène et/ou le copolymère d'éthylène de manière à obtenir une feuille à couches, et
(4) une étape 4 comprenant le chauffage de la feuille à couches obtenue à l'étape 3 pour convertir la couche de résine contenant un agent moussant en une couche de résine moussée.

9. Procédé de préparation d'une feuille à couches moussée selon la revendication 8, comprenant en outre, une étape 5 comprenant la réalisation de l'embossage d'une couche de surface la plus extérieure après l'étape 4.
